# EUROPÄISCHE PATENTSCHRIFT

(11) **EP 2 866 970 B1**
(45) Veröffentlichungstag und Bekanntmachung des Hinweises auf die Patenterteilung: **27.04.2016**
(21) Anmeldenummer: 13723685.7
(22) Anmeldetag: 29.04.2013
(51) Int. Cl.: B23P 15/00, H01F 7/08, F02M 59/44, F02M 61/16, H01F 7/128, H01F 7/16, F02M 51/06

(54) **VERFAHREN ZUR HERSTELLUNG EINES GEHÄUSES, INSBESONDERE EINES VENTILGEHÄUSES**
METHOD FOR PRODUCING A HOUSING, IN PARTICULAR A VALVE HOUSING
PROCÉDÉ POUR LA FABRICATION D'UN CARTER, EN PARTICULIER D'UN CARTER POUR SOUPAPE

(30) Priorität: 27.06.2012 DE 102012210956
(43) Veröffentlichungstag der Anmeldung: 06.05.2015
(73) Patentinhaber: Robert Bosch GmbH, 70442 Stuttgart (DE)
(72) Erfinder: WONDRACZEK, Lutz, 70825 Korntal-Muenchingen (DE)
(86) Internationale Anmeldenummer: PCT/EP2013/058855
(87) Internationale Veröffentlichungsnummer: WO 2014/000915

(56) Entgegenhaltungen:
- WO-A1-2005/061150
- DE-A1- 4 237 405
- DE-A1-102010 000 797
- JP-A- H1 177 336
- JP-A- 2000 170 620

## Beschreibung

### Stand der Technik

Die Erfindung betrifft ein Verfahren zur Herstellung des Gehäuses, insbesondere eines Ventilgehäuses für ein elektromagnetisch betätigbares Ventil gemäß dem Oberbegriff des Anspruchs 1.

Aus dem Stand der Technik, beispielsweise aus der Druckschrift EP 1699578 B1, sind Ventilgehäuse, insbesondere für Brennstoffeinspritzventile, bekannt, die einen klassischen dreiteiligen Aufbau eines inneren metallenen Strömungsführungsteils und zugleich Gehäusebauteils besitzt, wobei dieses Gehäuse aus einem einen Innenpol bildenden Einlassstutzen, einem nicht magnetischen Zwischenteil und einem einen Ventilsitz aufnehmenden Ventilsitzträger gebildet ist. Das Gehäuse ist hierbei als ein hohlzylindrisches metallenes Gehäuse mit zwei magnetisierbaren Gehäuseteilen und einer dazwischenliegenden, die Gehäuseteile magnetisch trennenden, amagnetischen Gehäusezone bekannt.

Im Stand der Technik ist es eine Herausforderung, eine magnetische Trennung derart auszuführen, dass eine hohe Trennschärfe zwischen magnetischen und nicht magnetischen bzw. amagnetischen Bereichen realisiert wird.

Aus der WO 2005/061150 A1 ist bereits ein Verfahren zur Herstellung eines festen Gehäuses, insbesondere eines Ventilgehäuses für ein elektromagnetisch betätigbares Ventil, bekannt, das sich durch die Verfahrensschritte auszeichnet:
Bereitstellen von wenigstens drei flachen metallischen Blechen nebeneinander, die jeweils unmittelbar benachbart unterschiedliche Magneteigenschaften aufweisen; Fügen der wenigstens drei Bleche an den unmittelbar benachbart liegenden Begrenzungskanten zur Bildung eines Blechabschnitts; Verformung des Blechabschnitts in eine Hülsenform; gegenseitige Befestigung der sich nun gegenüberliegenden, in Längsrichtung der Hülse verlaufenden Begrenzungskanten zur Bildung eines Hülsenrohlings; Endbearbeitung des Hülsenrohlings bis zum Erreichen einer gewünschten Geometrie des Gehäuses. Das Gehäuse eignet sich besonders für den Einsatz in Brennstoffeinspritzventilen in Brennstoffeinspritzanlagen von gemischverdichtenden fremdgezündeten Brennkraftmaschinen.

### Offenbarung der Erfindung

Das erfindungsgemäße Verfahren gemäß dem Hauptanspruch hat gegenüber dem Stand der Technik den Vorteil, dass eine verbesserte magnetische Trennung im Magnetkreis realisiert werden kann. Hierdurch ist es möglich, magnetische Kurzschlussströme zu vermeiden oder zumindest zu verringern und eine Verbesserung des Wirkungsgrades des Magnetkreises zu realisieren. Dies kann z. B. in Magnetventilen und/oder in Elektromotoren oder Generatoren eine deutliche Steigerung des Wirkungsgrades bewirken. Die magnetische Trennung soll dabei so ausgeführt werden, dass im Bereich des gewollten Magnetflusses ein magnetisch leitendes Material (weichmagnetisch, z.B. ferritischer oder martensitischer Stahl) eingesetzt wird und im Bereich des ungewollten magnetischen Flusses ein magnetisch nicht leitendes (unmagnetisches Material, beispielsweise austenitischer Stahl) verwendet wird.

Insbesondere die hohe Trennschärfe zwischen magnetischen und nicht magnetischen Bereichen sowie die geringe Magnetisierbarkeit bzw. die nicht Magnetisierbarkeit (d. h. mit einer magnetischen Polarisation J, die gegen null geht, bzw. die verschwindet, was gleichbedeutend ist mit einer verschwindenden oder höchstens sehr kleinen magnetischen Suszeptibilität) des austenitischen Bereiches spielt dabei eine entscheidende Rolle bezüglich der Wirksamkeit der magnetischen Trennung. Erfindungsgemäß wird ein plattierter Werkstoffverbund aus ferritischem Stahl für die Deckschichten und austenitischem Stahl für die Kernschicht als Halbzeug für entsprechende Bauteile, insbesondere als Teil eines Gehäuses, genutzt. Dabei sind die Bauteile entsprechend der gewünschten Lage der magnetischen Trennung aus dem Halbzeug zu entnehmen. Der Vorteil ist bei dem erfindungsgemäßen Verfahren, dass durch den Plattierungsprozess bzw. Plattierprozess eine feste Haftung der unterschiedlichen Werkstoffe miteinander gewährleistet wird und gleichzeltig eine sehr hohe Trennschärfe, insbesondere eine Trennschärfe im Bereich von weniger als 100 µm, erreicht werden kann. Die Trennschärfe bzw. die Verbindungszone bzw. der Verbindungsbereich zwischen den unterschiedlichen Materialien entspricht insbesondere der Difussionszone zwischen den Plattierpartnern. Die Größe der Trennschicht kann erfindurigsgemäß, insbesondere durch die entsprechende Auswahl der Plattierpartner, eingestellt werden.

Ausgestaltungen und Weiterbildungen der Erfindung sind den Unteransprüchen, sowie der Beschreibung unter Bezugnahme auf die Zeichnungen entnehmbar.

Gemäß einer bevorzugten Weiterbildung der vorliegenden Erfindung, ist es vorgesehen, dass während des zweiten Verfahrensschritts die erste, zweite und dritte Zone in einem ersten Teilschritt entlang eines Außenumfangs parallel zur axialen Richtung und in einem zweiten Teilschritt entlang eines Innenumfangs parallel zur axialen Richtung bearbeitet wird, wobei der erste Teilschritt zeitlich vor dem zweiten Teilschritt durchgeführt wird oder wobei der zweite Teilschritt zeitlich vor dem ersten Teilschritt durchgeführt wird. Es ist hierdurch erfindungsgemäß vorteilhaft möglich, dass verschiedenste Varianten zur endgültigen Herstellung des Bauteils bzw. des Gehäuses für ein Brennstoffeinspritzventil realisierbar sind.

Erfindungsgemäß ist ferner bevorzugt, dass während des zweiten Verfahrensschritts ein Stanzschritt erfolgt, insbesondere ein Feinstanzschritt, zur Bearbeitung des Innenumfangs und/oder zur Bearbeitung des Außenumfangs der ersten, zweiten und dritte Zone. Hierdurch ist es erfindungsgemäß möglich zumindest eine Oberfläche des Bauteils bzw. des erfindungsgemäßen Gehäuses mittels eines kostengünstigen Stanzvorgangs bzw. Feinstanzvorgangs zu realisieren.

Erfindungsgemäß ist weiterhin bevorzugt, dass während des zweiten Verfahrensschritts ein Frässchritt oder ein Bohrschritt erfolgt, insbesondere zur Bearbeitung des Innenumfangs und/oder zur Bearbeitung des Außenumfangs der ersten, zweiten und dritten Zone. Es ist hierdurch erfindungsgemäß eine besonders dimensionsgenaue und hinsichtlich Fertigungstoleranzen robuste Herstellung des Bauteils bzw. des erfindungsgemäßen Gehäuses möglich.

Gemäß einer weiteren Ausführungsform der vorliegenden Erfindung ist es erfindungsgemäß bevorzugt, dass während des zweiten Verfahrensschritts ein Wasserstrahlschneidschritt erfolgt, insbesondere zur Bearbeitung des Innenumfangs und/oder zur Bearbeitung des Außenumfangs der ersten, zweiten und dritten Zone. Hierdurch ist ebenfalls eine besonders maßgenaue und dennoch kostengünstige Realisierung des Bauteils bzw. erfindungsgemäßen Gehäuses möglich.

Ausführungsbeispiele der vorliegenden Erfindung sind in den Zeichnungen dargestellt und in der nachfolgenden Beschreibung näher erläutert.

### Kurze Beschreibung der Zeichnungen

Es zeigen:
Figur 1 schematisch eine schematische Schnittdarstellung eines erfindungsgemäßen Gehäuses eines elektromagnetisch betätigbaren Ventils,
Figur 2 schematisch eine Schnittdarstellung eines Brennstoffeinspritzventils gemäß dem Stand der Technik,
Figur 3 schematisch eine perspektivische Darstellung eines Halbzeuges aus drei Materialplatten zur Herstellung eines Gehäuses gemäß dem erfindungsgemäßen Verfahren und
Figuren 4 und 5 schematische Bearbeitungsvarianten zur Herstellung eines Bauteils aus dem Halbzeug zur Herstellung eines erfindungsgemäßen Gehäuses.

### Ausführungsform(en) der Erfindung

In den verschiedenen Figuren sind gleiche Teile stets mit den gleichen Bezugszeichen versehen und werden daher in der Regel auch jeweils nur einmal benannt bzw. erwähnt.

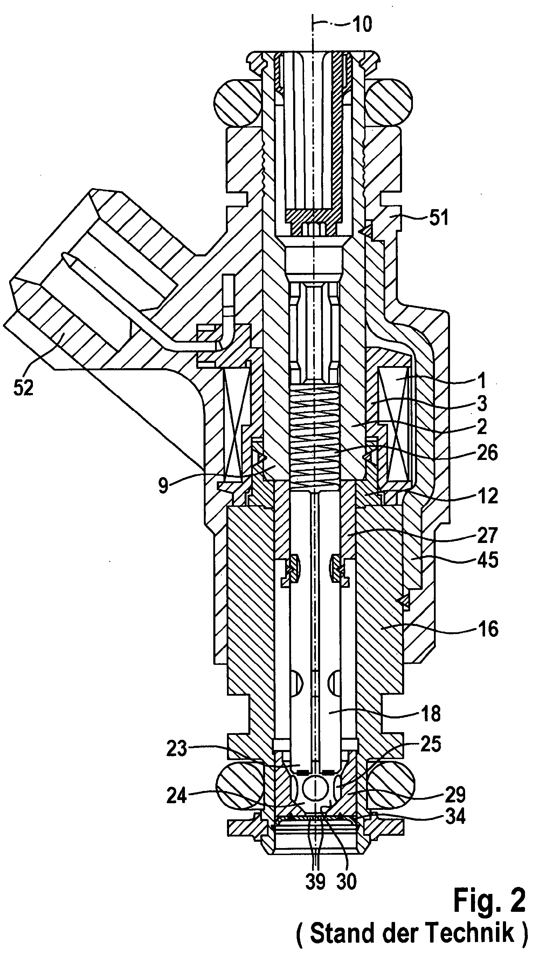

Das in der Figur 2 beispielsweise dargestellte, aus dem Stand der Technik bekannte, elektromagnetisch betätigbare Ventil in der Form eines Einspritzventils für Brennstoffeinspritzanlagen von gemischverdichtenden, fremdgezündeten oder selbstgezündeten Brennkraftmaschinen hat einen von einer Magnetspule 1 umgebenen, als Brennstoffeinlassstutzen und Innenpol dienenden rohrförmigen Kern 2, der beispielsweise über seine gesamte Länge einen konstanten Aussendurchmesser aufweist. Ein in radialer Richtung gestufter Spulenkörper 3 nimmt eine Bewicklung der Magnetspule 1 auf und ermöglicht in Verbindung mit dem Kern 2 einen kompakten Aufbau des Einspritzventils im Bereich der Magnetspule 1. Mit einem unteren Kernende 9 des Kerns 2 ist konzentrisch zu einer Ventillängsachse 10 dicht ein rohrförmiges metallenes nichtmagnetisches Zwischenteil 12 durch Schweissen verbunden und umgibt das Kernende 9 teilweise axial. Stromabwärts des Spulenkörpers 3 und des Zwischenteils 12 erstreckt sich ein rohrförmiger Ventilsitzträger 16, der fest mit dem Zwischenteil 12 verbunden ist. In dem Ventilsitzträger 16 ist eine axial bewegbare Ventilnadel 18 angeordnet. Am stromabwärtigen Ende 23 der Ventilnadel 18 ist ein kugelförmiger Ventilschliesskörper 24 vorgesehen, an dessen Umfang beispielsweise fünf Abflachungen 25 zum Vorbeiströmen des Brennstoffs vorgesehen sind. Die Betätigung des Einspritzventils erfolgt in bekannter Weise elektromagnetisch. Zur axialen Bewegung der Ventilnadel 18 und damit zum Öffnen entgegen der Federkraft einer Rückstellfeder 26 bzw. zum Schliessen des Einspritzventils dient der elektromagnetische Kreis mit der Magnetspule 1, dem Kern 2 und einem Anker 27. Der rohrförmige Anker 27 ist mit einem dem Ventilschliesskörper 24 abgewandten Ende der Ventilnadel 18 durch beispielsweise eine Schweißnaht fest verbunden und auf den Kern 2 ausgerichtet. In das stromabwärts liegende, dem Kern 2 abgewandte Ende des Ventilsitzträgers 16 ist ein zylinderförmiger Ventilsitzkörper 29, der einen festen Ventilsitz 30 aufweist, durch Schweißen dicht montiert. Der kugelförmige Ventilschließkörper 24 der Ventilnadel 18 wirkt mit dem sich in Strömungsrichtung kegelstumpfförmig verjüngenden Ventilsitz 30 des Ventilsitzkörpers 29 zusammen. An seiner unteren Stirnseite ist der Ventilsitzkörper 29 mit einer beispielsweise topfförmig ausgebildeten Spritzlochscheibe 34 fest und dicht durch eine z. B. mittels eines Lasers ausgebildete Schweißnaht verbunden. In der Spritzlochscheibe 34 sind wenigstens eine, beispielsweise vier durch Erodieren oder Stanzen ausgeformte Abspritzöffnungen 39 vorgesehen. Um den Magnetfluss zur optimalen Betätigung des Ankers 27 bei Bestromung der Magnetspule 1 und damit zum sicheren und genauen Öffnen und Schließen des Ventils zu dem Anker 27 zu leiten, ist die Magnetspule 1 von wenigstens einem, beispielsweise als Bügel ausgebildeten und als ferromagnetisches Element dienenden Leitelement 45 umgeben, das die Magnetspule 1 in Umfangsrichtung wenigstens teilweise umgibt sowie mit seinem einen Ende an dem Kem 2 und seinem anderen Ende an dem Ventilsitzträger 16 anliegt und mit diesen z. B. durch Schweißen, Löten bzw. Kleben verbindbar ist. Ein inneres metallenes Ventilrohr als Grundgerüst und damit auch Gehäuse des Brennstoffeinspritzventils bilden der Kern 2, das nichtmagnetische Zwischenteil 12 und der Ventilsitzträger 16, die fest miteinander verbunden sind und sich insgesamt über die gesamte Länge des Brennstoffeinspritzventils erstrecken. Alle weiteren Funktionsgruppen des Ventils sind innerhalb oder um das Ventilrohr herum angeordnet. Bei dieser Anordnung des Ventilrohrs handelt es sich um den klassischen dreiteiligen Aufbau eines Gehäuses für ein elektromagnetisch betätigbares Aggregat, wie ein Ventil, mit zwei ferromagnetischen bzw. magnetisierbaren Gehäusebereichen, die zur wirkungsvollen Leitung der Magnetkreislinien im Bereich des Ankers 27 mittels eines nichtmagnetischen Zwischenteils 12 magnetisch voneinander getrennt oder zumindest über eine magnetische Drosselstelle miteinander verbunden sind. Das Einspritzventil ist weitgehend mit einer Kunststoffumspritzung 51 umschlossen, die sich vom Kern 2 ausgehend in axialer Richtung über die Magnetspule 1 und das wenigstens eine Leitelement 45 bis zum Ventilsitzträger 16 erstreckt, wobei das wenigstens eine Leitelement 45 vollständig axial und in Umfangsrichtung überdeckt ist. Zu dieser Kunststoffumspritzung 51 gehört beispielsweise ein mitangespritzter elektrischer Anschlussstecker 52.

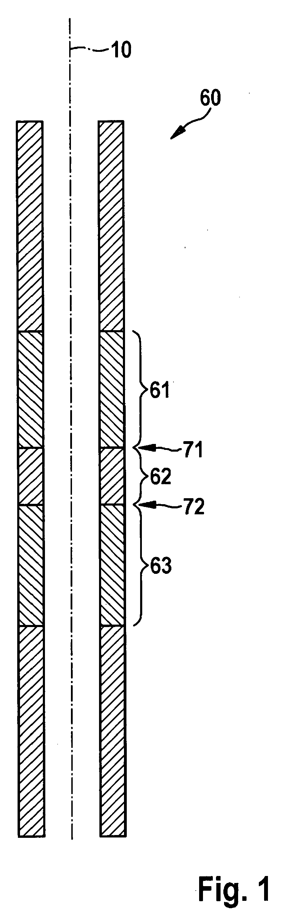

Mit den in den Figuren 1 sowie 3 bis 5 schematisch angedeuteten Verfahrensschritten des erfindungsgemäßen Verfahrens zur Herstellung eines festen Gehäuses ist es in vorteilhafter Weise möglich, besonders einfach und kostengünstig dünnwandige Gehäuse 60 für verschiedenste Einsatzzwecke, u. a. bevorzugt für elektromagnetisch betätigbare Ventile herzustellen, die ein oben beschriebenes dreiteiliges Ventilrohr ersetzen können. In Figur 1 ist ein erfindungsgemäßes Gehäuse 60 in einer sehr schematischen Schnittdarstellung (und insbesondere ohne Elemente wie eine Magnetspule, einen Anker, etc.) dargestellt. Hierbei ist erkennbar, dass das Gehäuse 60 entlang der Ventillängsachse 10, d.h. entlang einer axialen Richtung 10 längserstreckt ausgebildet ist (und um die axiale Richtung 10 zumindest in Teilbereichen rotationssymmetrisch ausgebildet ist), wobei das Gehäuse 60 wenigstens eine erste Zone 61 mit einem ersten Material, eine zweite Zone 62 mit einem zweiten Material und eine dritte Zone 63 mit einem dritten Material aufweist. Entlang der axialen Richtung 10 ist die erste Zone 61 in einem ersten Verbindungsbereich 71 unmittelbar mit der zweiten Zone 62 verbunden. Entlang ebenfalls der axialen Richtung 10 ist die zweite Zone 62 in einem zweiten Verbindungsbereich 72 unmittelbar mit der dritten Zone 63 verbunden ist. Zur Realisierung der o.g. Leitung des Magnetflusses weist das zweite Material gegenüber dem ersten und dritten Material unterschiedliche Magneteigenschaften auf.

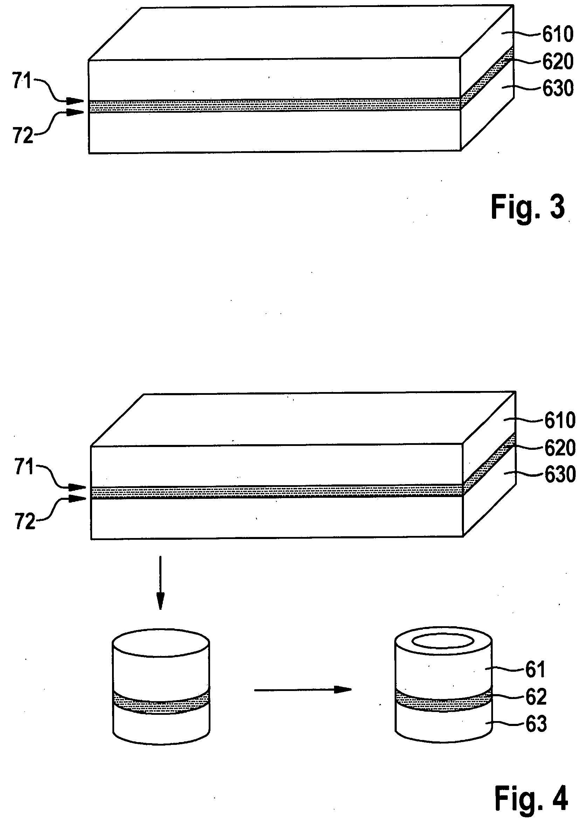

Erfindungsgemäß ist es vorgesehen, dass - wie in Figur 3 dargestellt - ein walzplattiertes oder sprengplattiertes Halbzeug mit drei Materialschichten in einem ersten Verfahrensschritt hergestellt wird. Hierbei wird eine erste Materialplatte 610, eine zweite Materialplatte 620 und eine dritte Materialplatte 630 derart miteinander verbunden, dass die Materialplatten 610, 620, 630 jeweils übereinander angeordnet sind, d. h. der erste Verbindungsbereich 71 erstreckt sich zwischen der ersten und zweiten Materialplatte 610, 620 parallel zu den Haupterstreckungsebenen der ersten und zweiten Materialplatten 610, 620 und der zweite Verbindungsbereich 72 erstreckt sich jeweils ebenfalls parallel zu den Haupterstreckungsebenen der zweiten Materialplatte 620 und der dritten Materialplatte 630. Durch die Plattierung der ersten Materialplatte 610 mit der zweiten Materialplatte 620 und der zweiten Materialplatte 620 mit der dritten Materialplatte 630 wird eine nicht trennbare Verbindung durch Temperatur und Druck erreicht. Bekannte Techniken zur Verbindung von Materialplatten umfassen das Walzplattieren, das Sprengplattieren bzw. Walzschweißplattieren.

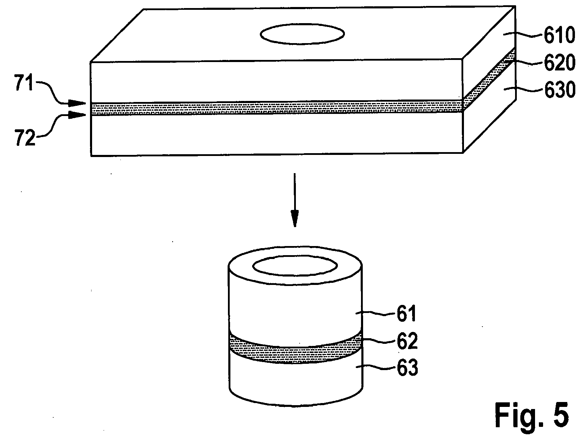

In den Figuren 4 und 5 sind schematisch Bearbeitungsvarianten zur Herstellung eines Bauteils aus dem Halbzeug zur Herstellung eines erfindungsgemäßen Gehäuses 60 dargestellt. Gemäß Figur 4 wird aus dem Halbzeug (in Figur 4 oben dargestellt) zunächst ein sogenannter Rohling hergestellt, insbesondere durch Laserschneiden und/oder Wasserstrahlschneiden und/oder Stanzen und/oder durch Fräsen aus dem plattierten Halbzeug. In einem zweiten Teilschritt des zweiten Verfahrensschritts wird ein Hülsenbauteil aus dem Rohling, beispielsweise durch Stanzen und/oder durch Bohren, hergestellt. Das Hülsenbauteil, welches nach dem zweiten Teilschritt des zweiten Verfahrensschritts erhalten wird, kann sodann als Teil des Gehäuses 60 mit weiteren Gehäusebauteilen zur Realisierung, beispielsweise eines Brennstoffeinspritzventils, verbunden werden, insbesondere durch eine Schweißverbindung am der dritten Zone abgewandten Rand der ersten Zone 61 sowie am der ersten Zone 61 abgewandten Rand der dritten Zone 63. Eine solche Schweißverbindung ist erfindungsgemäß in vorteilhafter Weise in einem solchen Bereich des Gehäuses 60 angeordnet, welcher hinsichtlich der zu verbindenden Bauteilbereiche gleiche oder ähnliche magnetische Eigenschaften aufweist, sodass durch den Schweißvorgang keine Beeinträchtigung der magnetischen Trennung resultiert.

Gemäß der Figur 5 ist eine weitere Variante der Bearbeitung zur Herstellung eines Bauteils aus dem Halbzeug zur Herstellung eines erfindungsgemäßen Gehäuses 60 dargestellt. Bei der in Figur 5 dargestellten Bearbeitungsvariante wird aus dem Halbzeug zunächst der innere Durchmesser des herzustellenden Hülsenbauteils realisiert, beispielsweise durch Laserschneiden und/oder durch Wasserstrahlschneiden und/oder durch Fräsen und/oder durch Stanzen und/oder durch Bohren. In einem zweiten Teilschritt des zweiten Verfahrensschritts wird sodann der äußere Durchmesser des Hülsenbauteils durch Laserschneiden und/oder durch Wasserstrahlschneiden und/oder durch Fräsen und/oder durch Stanzen hergestellt, sodass ebenfalls im zweiten Verfahrensschritt aus dem Halbzeug das Hülsenbauteil zum Einbau in ein erfindungsgemäßes Gehäuse 60 erhalten wird.

## Patentansprüche

1. Verfahren zur Herstellung eines Gehäuses (60), insbesondere eines Ventilgehäuses für ein elektromagnetisch betätigbares Ventil, wobei das Gehäuse (60) entlang einer axialen Richtung (10) längserstreckt ausgebildet ist und um die axiale Richtung (10) zumindest in Teilbereichen rotationssymmetrisch ausgebildet ist, wobei das Gehäuse (60) wenigstens eine erste Zone (61) mit einem ersten Material, eine zweite Zone (62) mit einem zweiten Material und eine dritte Zone (63) mit einem dritten Material aufweist, wobei, entlang der axialen Richtung (10), die erste Zone (61) in einem ersten Verbindungsbereich (71) unmittelbar mit der zweiten Zone (62) verbunden ist und wobei, ebenfalls entlang der axialen Richtung (10), die zweite Zone (62) in einem zweiten Verbindungsbereich (72) unmittelbar mit der dritten Zone (63) verbunden ist, wobei das zweite Material gegenüber dem ersten und dritten Material unterschiedliche Magneteigenschaften aufweist, **dadurch gekennzeichnet, dass** das Verfahren die folgenden Verfahrensschritte aufweist:
-- in einem ersten Verfahrensschritt, Verbinden von je einer jeweils eine Haupterstreckungsebene aufweisenden Materialplatte (610, 620, 630) des ersten, zweiten und dritten Materials im ersten und zweiten Verbindungsbereich (71, 72), wobei sich der erste und zweite Verbindungsbereich (71, 72) jeweils parallel zu den Haupterstreckungsebenen der Materialplatten (610, 620, 630) erstreckt,
-- in einem zweiten Verfahrensschritt, Bearbeiten der miteinander verbundenen Materialplatten (610, 620, 630) zur Herstellung der ersten, zweiten und dritten Zone (61, 62, 63) des Gehäuses (60).

2. Verfahren nach Anspruch 1, **dadurch gekennzeichnet, dass** die Verbindung der Materialplatten (610, 620, 630) im ersten Verfahrensschritt mittels Walzplattieren oder mittels Sprengplattieren erfolgt.

3. Verfahren nach einem der vorhergehenden Ansprüche, **dadurch gekennzeichnet, dass** während des zweiten Verfahrensschritts die erste, zweite und dritte Zone (61, 62, 63) in einem ersten Teilschritt entlang eines Außenumfangs parallel zur axialen Richtung (10) und in einem zweiten Teilschritt entlang eines Innenumfangs parallel zur axialen Richtung (10) bearbeitet wird, wobei der erste Teilschritt zeitlich vor dem zweiten Teilschritt durchgeführt wird oder der zweite Teilschritt zeitlich vor dem ersten Teilschritt durchgeführt wird.

4. Verfahren nach einem der vorhergehenden Ansprüche, **dadurch gekennzeichnet, dass** während des zweiten Verfahrensschritts ein Stanzschritt erfolgt, insbesondere ein Feinstanzschritt zur Bearbeitung des Innenumfangs und/oder zur Bearbeitung des Außenumfangs der ersten, zweiten und dritten Zone (61, 62, 63).

5. Verfahren nach einem der vorhergehenden Ansprüche, **dadurch gekennzeichnet, dass** während des zweiten Verfahrensschritts ein Frässchritt oder ein Bohrschritt erfolgt, insbesondere zur Bearbeitung des Innenumfangs und/oder zur Bearbeitung des Außenumfangs der ersten, zweiten und dritten Zone (61, 62, 63).

6. Verfahren nach einem der vorhergehenden Ansprüche, **dadurch gekennzeichnet, dass** während des zweiten Verfahrensschritts ein Wasserstralschneidschritt erfolgt, insbesondere zur Bearbeitung des Innenumfangs und/oder zur Bearbeitung des Außenumfangs der ersten, zweiten und dritten Zone (61, 62, 63).

7. Verfahren nach einem der vorhergehenden Ansprüche, **dadurch gekennzeichnet, dass** das zweite Material austenitisch ist und dass das erste Material ferromagnetisch oder ferritisch oder martensitisch und das dritte Material ferromagnetisch oder ferritisch ist.

## Claims

1. Method for producing a housing (60), in particular a valve housing for an electromagnetically actuable valve, wherein the housing (60) is designed such that it extends longitudinally along an axial direction (10) and is designed so as to be axisymmetric about the axial direction (10) at least in partial regions, wherein the housing (60) has at least one first zone (61) with a first material, a second zone (62) with a second material and a third zone (63) with a third material, wherein, along the axial direction (10), the first zone (61) is directly connected to the second zone (62) in a first connection region (71), and wherein, also along the axial direction (10), the second zone (62) is directly connected to the third zone (63) in a second connection region (72), wherein the second material has different magnetic properties in comparison to the first and third material, **characterized in that** the method has the following method steps:
- in a first method step, connecting a material plate (610, 620, 630), each having a main plane of extent, of each of the first, second and third materials in the first and second connection regions (71, 72), wherein the first and second connection regions (71, 72) each extend parallel to the main plane of extent of the material plates (610, 620, 630),
- in a second method step, machining the material plates (610, 620, 630), which are connected to one another, to produce the first, second and third zones (61, 62, 63) of the housing (60).

2. Method according to Claim 1, **characterized in that** connecting the material plates (610, 620, 630) in the first method step is carried out by means of roll-bonded cladding or by means of explosion cladding.

3. Method according to either of the preceding claims, **characterized in that**, during the second method step, the first, second and third zones (61, 62, 63) are machined, in a first part step, along an outer circumference parallel to the axial direction (10) and, in a second part step, along an inner circumference parallel to the axial direction (10), the first part step being carried out temporally prior to the second part step or the second part step being carried out temporally prior to the first part step.

4. Method according to one of the preceding claims, **characterized in that**, during the second method step, a stamping step is carried out, in particular a fine stamping step for machining the inner circumference and/or for machining the outer circumference of the first, second and third zones (61, 62, 63).

5. Method according to one of the preceding claims, **characterized in that**, during the second method step, a milling step or a boring step is carried out, in particular for machining the inner circumference and/or for machining the outer circumference of the first, second and third zones (61, 62, 63).

6. Method according to one of the preceding claims, **characterized in that**, during the second method step, a water jet cutting step is carried out, in particular for machining the inner circumference and/or for machining the outer circumference of the first, second and third zones (61, 62, 63).

7. Method according to one of the preceding claims, **characterized in that** the second material is austenitic and the first material is ferromagnetic or ferritic or martensitic and the third material is ferromagnetic or ferritic.

## Revendications

1. Procédé de fabrication d'un boîtier (60), en particulier d'un boîtier de soupape pour une soupape à commande électromagnétique, le boîtier (60) étant réalisé de manière à s'étendre en longueur le long d'une direction axiale (10) et étant réalisé avec une symétrie de révolution autour de la direction axiale (10) au moins dans des régions partielles, le boîtier (60) présentant au moins une première zone (61) avec un premier matériau, une deuxième zone (62) avec un deuxième matériau et une troisième zone (63) avec un troisième matériau, la première zone (61), le long de la direction axiale (10), étant directement connectée à la deuxième zone (62) dans une première région de connexion (71) et la deuxième zone (62), également le long de la direction axiale (10), étant directement connectée à la troisième zone (63) dans une deuxième région de connexion (72), le deuxième matériau présentant, par rapport au premier et au troisième matériau, des propriétés magnétiques différentes, **caractérisé en ce que** le procédé présente les étapes de procédé suivantes :
- dans une première étape de procédé, connexion à chaque fois d'une plaque de matériau (610, 620, 630) du premier, deuxième et troisième matériau, présentant à chaque fois un plan d'étendue principale, dans la première et la deuxième région de connexion (71, 72), la première et la deuxième région de connexion (71, 72) s'étendant à chaque fois parallèlement aux plans d'étendue principale des plaques de matériau (610, 620, 630),
- dans une deuxième étape de procédé, usinage des plaques de matériau connectées les unes aux autres (610, 620, 630) pour fabriquer la première, deuxième et troisième zone (61, 62, 63) du boîtier (60).

2. Procédé selon la revendication 1, **caractérisé en ce que** la connexion des plaques de matériau (610, 620, 630) s'effectue dans la première étape de procédé par un plaquage-laminage ou au moyen d'un plaquage par explosion.

3. Procédé selon l'une quelconque des revendications précédentes, **caractérisé en ce que** pendant la deuxième étape de procédé, la première, deuxième et troisième zone (61, 62, 63) sont usinées dans une première étape partielle le long d'une périphérie extérieure parallèlement à la direction axiale (10) et dans une deuxième étape partielle le long d'une périphérie intérieure parallèlement à la direction axiale (10), la première étape partielle étant effectuée dans le temps avant la deuxième étape partielle ou la deuxième étape partielle étant effectuée dans le temps avant la première étape partielle.

4. Procédé selon l'une quelconque des revendications précédentes, **caractérisé en ce que** pendant la deuxième étape de procédé, une étape d'estampage est effectuée, en particulier une étape d'estampage fin pour l'usinage de la périphérie intérieure et/ou pour l'usinage de la périphérie extérieure de la première, deuxième et troisième zone (61, 62, 63).

5. Procédé selon l'une quelconque des revendications précédentes, **caractérisé en ce que** pendant la deuxième étape de procédé, une étape de fraisage ou une étape de perçage est effectuée, en particulier pour l'usinage de la périphérie intérieure et/ou pour l'usinage de la périphérie extérieure de la première, deuxième et troisième zone (61, 62, 63).

6. Procédé selon l'une quelconque des revendications précédentes, **caractérisé en ce que** pendant la deuxième étape de procédé, une étape de découpage au jet d'eau est effectuée, en particulier pour l'usinage de la périphérie intérieure et/ou pour l'usinage de la périphérie extérieure de la première, deuxième et troisième zone (61, 62, 63).

7. Procédé selon l'une quelconque des revendications précédentes, **caractérisé en ce que** le deuxième matériau est austénitique et **en ce que** le premier matériau est ferromagnétique ou ferritique ou martensitique et le troisième matériau est ferromagnétique ou ferritique.
